# EUROPÄISCHE PATENTSCHRIFT

(11) **EP 3 565 978 B1**
(45) Veröffentlichungstag und Bekanntmachung des Hinweises auf die Patenterteilung: **14.10.2020**
(21) Anmeldenummer: 17822179.2
(22) Anmeldetag: 05.12.2017
(51) Int. Cl.: F16B 13/06, F16B 31/02, F16B 37/14

(54) **VORRICHTUNG ZUR DREHMOMENTBEGRENZUNG MIT HALTEKLAUEN**
DEVICE FOR LIMITING TORQUE WITH FIXING CLAWS
LIMITEUR DE COUPLE COMPRENANT UNE PINCE

(30) Priorität: 05.01.2017 EP 17150335
(43) Veröffentlichungstag der Anmeldung: 13.11.2019
(73) Patentinhaber: Hilti Aktiengesellschaft, 9494 Schaan (LI)
(72) Erfinder: SHIMAHARA, Hideki, 9472 Grabs (CH); INFANGER, Erich, 7220 Schiers (CH)
(74) Vertreter: Hilti Aktiengesellschaft Corporate Intellectual Property
(86) Internationale Anmeldenummer: PCT/EP2017/081493
(87) Internationale Veröffentlichungsnummer: WO 2018/127338

(56) Entgegenhaltungen:
- DE-A1-102010 043 167
- GB-A- 1 330 320
- US-A- 4 215 600

## Beschreibung

Die Erfindung betrifft eine Vorrichtung zur Drehmomentbegrenzung gemäss dem Oberbegriff des Anspruchs 1. Eine solche Vorrichtung weist eine Mutter, insbesondere mit zumindest einem Innengewinde, und ein Halteelement auf, wobei das Halteelement in einem rückwärtigen Bereich des Halteelements ein Kopfteil mit einem Mitnahmeprofil zur drehfesten Kopplung des Kopfteils mit einem Setzwerkzeug aufweist, das Halteelement in einem vorderen Bereich des Halteelements ein Aufnahmeteil mit einer nach vorne hin offenen Aufnahme aufweist, in welcher die Mutter drehfest aufgenommen ist, und das Halteelement Mittel zur Drehmomentübertragung vom Kopfteil auf das Aufnahmeteil aufweist, welche das Kopfteil und das Aufnahmeteil verbinden, wobei die Mittel zur Drehmomentübertragung bei einem Grenzdrehmoment unter Aufhebung der Verbindung zwischen Kopfteil und Aufnahmeteil brechen. Die Erfindung betrifft ferner eine Befestigungsanordnung bestehend aus einem Spreizanker und einer solchen Vorrichtung zur Drehmomentbegrenzung und ein Verfahren zum Herstellen einer solchen Vorrichtung.

Aus der DE 102010043167 A1 ist eine gattungsgemässe Vorrichtung zur Drehmomentbegrenzung bekannt, die in Verbindung mit Spreizankern verwendet werden kann, und die eine Sollbruchstelle aufweist, welche beim Erreichen eines Grenzdrehmoments bricht. Gemäss DE 102010043167 A1 weist die Vorrichtung Mittel zur drehentkoppelten Kraftübertragung vom Kopfteil auf die Mutter auf, so dass die Sollbruchstelle beim Einhämmern geschont wird.

Eine weitere Vorrichtung zur Drehmomentbegrenzung ist in der Internationalen Patentanmeldung mit dem PCT-Aktenzeichen PCT/EP2016/072232 beschrieben. Diese Vorrichtung weist zum Klemmen der Mutter beziehungsweise des Bolzenkopfs zumindest ein Klemmelement aus einem Kunststoffmaterial auf.

Andere Vorrichtungen zur Drehmomentbegrenzung, die auf Muttern oder Bolzenköpfe aufgesteckt werden können, sind aus der FR 2598855 A1 und der US 4215600 A bekannt. Gemäss US 4215600 A können dabei im Inneren des Aufnahmeteils für die Mutter einstückig mit dem Aufnahmeteil ausgebildete Klemmvorsprünge vorgesehen sein, welche seitlich gegen die Mutter wirken.

Aus der DE 102011106696 A1 geht eine Schraube mit einem mehrteiligen Kopf hervor, welcher eine äussere Hülse aufweist, die um ein Innenteil des Kopfs herum drehbar ist.

Die EP1353080 B1 zeigt ein Drehmomentbegrenzungselement für Spreizanker.

Aufgabe der Erfindung ist es, eine Vorrichtung zur Drehmomentbegrenzung anzugeben, welche bei geringem Aufwand, insbesondere Herstellungsaufwand, eine besonders hohe Zuverlässigkeit und besonders gute Handhabbarkeit gewährleistet, insbesondere im Hinblick auf die Verwendung der Vorrichtung im Zusammenhang mit Spreizankern, sowie eine entsprechende Befestigungsanordnung und ein entsprechendes Herstellungsverfahren anzugeben.

Die Aufgabe wird erfindungsgemäss durch eine Vorrichtung zur Drehmomentbegrenzung mit den Merkmalen des Anspruchs 1, eine Befestigungsanordnung mit den Merkmalen des Anspruchs 10 und ein Verfahren zum Herstellen einer solchen Vorrichtung mit den Merkmalen des Anspruchs 11 gelöst. Bevorzugte Ausführungsformen der Vorrichtung sind in den abhängigen Ansprüchen angegeben.

Eine erfindungsgemässe Vorrichtung zur Drehmomentbegrenzung ist dadurch gekennzeichnet, dass das Halteelement zumindest eine Halteklaue aufweist, welche am Aufnahmeteil angeordnet ist, und welche die Mutter auf der Vorderseite der Mutter in der Aufnahme sichert.

Die Erfindung basiert auf der Erkenntnis, dass es bei der Verwendung von Vorrichtungen zur Drehmomentbegrenzung in Kombination mit Spreizankern zu besonderen Lastsituationen kommen kann, die bei bekannten Vorrichtungen unter Umständen zu Zuverlässigkeitsbeschränkungen führen können. So werden Spreizanker häufig in der sogenannten Durchsteckmontage montiert. Bei dieser Art der Montage ist die Mutter zu Beginn des Montagevorgangs bereits auf den Spreizanker geschraubt und der Spreizanker wird mit aufgeschraubter Mutter mittels Hammerschlägen, welche auf die Rückseite des Spreizankers aufgebracht werden, durch ein Anbauteil hindurch in ein Bohrloch eingetrieben. Aufgrund der nicht vernachlässigbaren Masse des Halteelements der Vorrichtung zur Drehmomentbegrenzung kommt es bei den Hammerschlägen zu Trägheitskräften zwischen der mit dem eingehämmerten Anker axial verbundenen Mutter einerseits und dem die Mutter umgebenden Halteelement andererseits. Diese Trägheitskräfte treiben die Mutter nach vorne aus dem Halteelement heraus und können im Extremfall dazu führen, dass das Halteelement der Vorrichtung zur Drehmomentbegrenzung von der Mutter abfällt, so dass keine zuverlässige Begrenzung des Drehmoments und keine Prüfung des Erreichens eines Solldrehmoments mehr möglich ist. Es hat sich gezeigt, dass dies unter Umständen sogar trotz vorhandener Klemmelemente geschehen kann, da eine übliche Klemmung den bei Hammerschlägen auftretenden Kräften häufig nicht widerstehen kann.

Hier setzt die Erfindung an und sieht am Halteelement eine oder mehrere Halteklauen vor, welche die Mutter gegen ein vorderseitiges Heraustreten der Mutter aus der nach vorne hin offenen Aufnahme des Aufnahmeteils sichern. Die zumindest eine Halteklaue bildet ein Hindernis, an dem die Mutter vorderseitig anschlägt, und welches die Mutter in der Aufnahme zurückhält. Die Mutter wird also durch die zumindest eine Halteklaue an der Vorderseite der Mutter formschlüssig, das heisst durch Ineinandergreifen, gesichert. Verglichen mit bekannten Klemmvorsprüngen, die primär reibungsbasiert und seitlich an der Mutter wirken, wird somit eine besonders zuverlässige Sicherung zur Verfügung gestellt, die auch den vergleichsweise hohen Kräften, die bei Hammerschlägen im Zusammenhang mit Spreizankern auftreten, besonders zuverlässig widerstehen kann. Es wird daher in besonders einfacher Weise eine Vorrichtung zur Drehmomentbegrenzung zur Verfügung gestellt, die auch in Kombination mit Spreizankern besonders zuverlässig einsetzbar ist, und auch hier eine besonders zuverlässige Prüfung des Erreichens eines Solldrehmoments ermöglicht. Im Gegensatz zu Klemmvorsprüngen, welche gegen die Seitenwände der Mutter wirken, und welche in einem Gussverfahren nur schwierig zu fertigende Hinterschneidungen bilden, können die erfindungsgemäss gegen die vordere Stirnseite der Mutter wirkenden Halteklauen auch besonders einfach gefertigt werden, vorzugsweise durch nicht-spanendes Umformen des Rohlings, aus dem die Vorrichtung zur Drehmomentbegrenzung gefertigt wird, insbesondere durch Einpressen des Rohlings in eine Matrize. So kann beispielsweise vorgesehen sein, den Rohling im Anschluss an das Einlegen der Mutter in die Aufnahme durch Einpressen in eine Matrize am Aufnahmeteil radial so zu beaufschlagen, dass Material des Rohlings radial nach innen fliesst und die Halteklaue bildet. Schliesslich ist die erfindungsgemäss erhaltene Verbindung insbesondere auch bei vorzeitigen Belastungen beim Transport, bei Temperaturschwankungen und/oder unter Langzeiteinwirkungen besonders sicher.

Insbesondere kann die zumindest eine Halteklaue vom Aufnahmeteil radial nach innen vorstehen und/oder der nach vorne hin offenen Aufnahme für die Mutter axial vorgelagert sein. Vorzugsweise ist die zumindest eine Halteklaue an der Vorderseite des Aufnahmeteils am Aufnahmeteil angeordnet, was herstellungstechnisch vorteilhaft ist. Die zumindest eine Halteklaue bildet einen vorderseitigen Anschlag für die Mutter. Die Aufnahme ist insbesondere nach vorne hin offen, um ein Einbringen der Mutter bei der Fertigung von vorne her zu gewährleisten. Bei der fertigen Vorrichtung kann die Mutter jedoch aufgrund der zumindest einen Halteklaue nicht mehr nach vorne aus der Aufnahme treten.

Die Richtungsangaben vorne, hinten, vorderseitig, rückwärtig usw. sollen hier einheitlich verwendet werden. Somit ist beispielsweise die Vorderseite der Mutter der Rückseite der Mutter in derselben Richtung vorgelagert wie das im vorderen Bereich des Halteelements angeordnete Aufnahmeteil dem im rückwärtigen Bereich des Halteelements angeordneten Kopfteil. Insbesondere kann unter der Vorderseite der Mutter, an welcher die Halteklauen gegen die Mutter wirken, diejenige Seite der Mutter verstanden werden, welche dem Kopfteil abgewandt ist.

Soweit hier von einer Axialrichtung und Radialrichtung die Rede ist soll sich dies insbesondere auf dieselbe Achse beziehen, welche insbesondere eine Längs- und/oder Symmetrieachse der Vorrichtung, des Kopfteils, des Aufnahmeteils, des Mitnahmeprofils, der Aufnahme und/oder des Spreizankers sein kann, wobei die Achsen dieser Elemente vorzugsweise zusammenfallen.

Die Mutter kann beispielsweise eine DIN-Mutter sein. Sie weist eine Durchgangsöffnung mit einem Innengewinde auf, welches insbesondere auf eine Gewindestange schraubbar ist. Die Gewindestange kann vorzugsweise der Schaft eines Spreizankers sein.

Das Mitnahmeprofil dient zum drehfesten Ankoppeln des Abtriebs des Setzwerkzeugs an das Kopfteil und insbesondere zum Aufbringen eines Drehmoments vom Setzwerkzeug auf das Kopfteil, insbesondere eines in Axialrichtung gerichteten Drehmoments. Das Mitnahmeprofil kann zum Beispiel ein Aussenmehrkantprofil, insbesondere ein Aussensechskantprofil, sein, das umfangsseitig am Kopfteil angeordnet ist. Das Setzwerkzeug kann beispielsweise ein Schraubenschlüssel oder eine Handmaschine sein. Vorzugsweise kann das Kopfteil einen Durchgang für eine Gewindestange aufweisen, wobei der Durchgang in die Aufnahme für die Mutter mündet, und wobei der Durchgang nach hinten hin offen ist. Demgemäss kann die Gewindestange die Vorrichtung durchlaufen.

Die Aufnahme kann insbesondere eine im Halteelement gebildete Ausnehmung sein, in welche die Mutter eingelegt ist. Die Aufnahme ist vorzugsweise umfangsseitig durch das Aufnahmeteil begrenzt und/oder rückseitig durch das Kopfteil begrenzt. Das Aufnahmeteil bildet vorzugsweise eine Hülse, welche die Aufnahme umgibt und welche somit auch die Mutter zumindest bereichsweise umgibt. Die Mutter ist drehfest in der Aufnahme angeordnet, insbesondere mit dem Aufnahmeteil drehfest in der Aufnahme angeordnet, das heisst zwischen dem Aufnahmeteil und der in der Aufnahme angeordneten Mutter besteht eine Verbindung, vorzugsweise eine Formschlussverbindung, welche eine Übertragung eines Drehmoments, insbesondere eines axial gerichteten Drehmoments, zwischen Aufnahmeteil und Mutter ermöglicht. Vorzugsweise kann die Aufnahme für die drehfeste Verbindung zwischen Aufnahmeteil und Mutter ein weiteres Mitnahmeprofil, beispielsweise ein Innenmehrkantprofil, insbesondere ein Innensechskantprofil, aufweisen, welches mit einem Aussenprofil der Mutter korrespondiert.

Insbesondere ist die erfindungsgemässe Vorrichtung so ausgestaltet, dass die Mittel zur Drehmomentübertragung beim Grenzdrehmoment unter Aufhebung der Verbindung zwischen Kopfteil und Aufnahmeteil vorrangig brechen. Unter vorrangigem Brechen kann insbesondere verstanden werden, dass die Mittel zur Drehmomentübertragung bei einem geringeren Drehmoment brechen als das Kopfteil und als das Aufnahmeteil, so dass die Mittel zur Drehmomentübertragung eine Sollbruchstelle bilden.

Die Mutter kann im Aufnahmeteil versenkt sein. Vorzugsweise steht die Mutter jedoch ein zumindest kleines Stück weit nach vorne über das Aufnahmeteil vor. Besonders bevorzugt ist es, dass die Mutter nach vorne über die zumindest eine Halteklaue vorsteht. Hierdurch kann in besonders einfacher Weise verhindert werden, dass die zumindest eine Halteklaue ein der Vorrichtung zur Drehmomentbegrenzung vorgelagertes Teil, beispielsweise eine vorgelagerte Unterlegscheibe berührt. Hierdurch wiederum kann ein besonders gut definiertes Reibverhalten erhalten werden, was insbesondere im Hinblick auf das Verhältnis zwischen Anzugsmoment und Vorspannung wichtig sein kann. Insbesondere kann es aus demselben Grunde vorteilhaft sein, dass die Mutter über das gesamte Halteelement nach vorne vorsteht.

Besonders bevorzugt ist es, dass die Halteklauen und das Aufnahmeteil monolithisch ausgebildet sind, wobei unter einer monolithischen Ausbildung insbesondere eine Ausbildung ohne Fügstellen verstanden werden kann. Dies kann im Hinblick auf den Herstellungsaufwand und die Zuverlässigkeit vorteilhaft sein. Beispielsweise kann die zumindest eine Halteklaue durch einfaches Deformieren des Aufnahmeteils gefertigt werden.

Zweckmässigerweise kann vorgesehen werden, dass die zumindest eine Halteklaue und das Aufnahmeteil aus einem Metallgussmaterial, insbesondere einem Metalldruckgussmaterial bestehen. Dies kann unter anderem im Hinblick auf den Herstellungsaufwand vorteilhaft sein. Auch die Mittel zur Drehmomentübertragung und/oder das Kopfteil sind vorzugsweise metallisch und weisen besonders bevorzugt zumindest bereichsweise ein Metallgussmaterial auf. Vorzugsweise sind das Aufnahmeteil, die Mittel zur Drehmomentübertragung und zumindest ein Teil des Kopfteils monolithisch ausgebildet, was den Herstellungsaufwand weiter reduzieren kann. Das Kopfteil kann auch mehrteilig ausgebildet sein und eine separate Hülse aus duktilem Material aufweisen, an welcher das Mitnahmeprofil ausgebildet ist.

Grundsätzlich könnte eine einzige Halteklaue vorgesehen sein. Diese Halteklaue könnte für eine besonders gute Kraftübertragung auch geschlossen ringförmig ausgebildet sein und die Aufnahme an der Vorderseite der Aufnahme vollständig umlaufen. Besonders bevorzugt ist es, dass das Halteelement mehrere, insbesondere separate, Halteklauen aufweist, welche am Aufnahmeteil angeordnet sind, und welche die Mutter auf der Vorderseite der Mutter in der Aufnahme sichern. Dies kann einerseits für eine besonders gute Kraftübertragung vorteilhaft sein. Darüber hinaus kann es im Hinblick auf die Bruchpräzision der Vorrichtung vorteilhaft sein, nämlich insbesondere dann, wenn die Halteklauen durch Deformation des Aufnahmeteils gefertigt werden. Im Gegensatz zu einer Ausgestaltung mit einer einzigen geschlossen ringförmigen Halteklaue können separate Halteklauen in Umfangsrichtung versetzt zu den Mitteln zur Drehmomentübertragung, die beispielsweise als Stege ausgeführt sein können, angeordnet werden, und es kann in besonders einfacher Weise vermieden werden, dass die Mittel zur Drehmomentübertragung vorzeitig, nämlich bei der Fertigung der Halteklauen belastet werden, was die Bruchpräzision beinträchtigen könnte.

Sofern mehrere vorgesehen Halteklauen sind, können die hier im Zusammenhang mit einer Halteklaue beschriebenen Merkmale vorzugsweise für sämtliche Halteklauen, aber auch nur für einen Teil der Halteklauen oder auch nur für eine einzige Halteklaue gelten.

Beispielsweise können drei oder sechs Halteklauen vorgesehen sein. Besonders bevorzugt ist es, dass die Aufnahme ein Innenmehrkantprofil aufweist, wobei vorzugsweise die Zahl der Halteklauen der Zahl der Kanten des Innenmehrkantprofils entspricht. Insbesondere kann vorgesehen sein, dass zumindest ein Teil der Halteklauen jeweils einer Kante des Innenmehrkantprofils vorgelagert ist, insbesondere in einer die jeweilige Kante in Umfangsrichtung überlappenden Position. Demgemäss können die Halteklauen im Kantenbereich der Mutter gegen die Mutter wirken, was kräftesymmetrisch und geometrisch besonders vorteilhaft sein kann.

Weiterhin ist es zweckmässig, dass die Mittel zur Drehmomentübertragung als zumindest ein Steg ausgebildet sind, welcher das Kopfteil und das Aufnahmeteil verbindet. Dies stellt eine konstruktiv besonders einfache und zugleich zuverlässige Ausgestaltung dar. Vorzugsweise sind die die Mittel zur Drehmomentübertragung als Stege ausgebildet, welche das Kopfteil und das Aufnahmeteil verbinden. Die Stege können eine Sollbruchstelle bilden, die bei Erreichen des Grenzdrehmoments bricht. Die Stege können insbesondere um die Längsachse der Vorrichtung herum angeordnet sein. Die Stege erstrecken sich vorzugsweise zumindest bereichsweise in Radialrichtung, was für den Kraftfluss vorteilhaft sein kann. Im Hinblick auf die Kräftesymmetrie kann es vorteilhaft sein, dass die Stege äquidistant in Umfangsrichtung angeordnet sind. Vorzugsweise weist das Kopfteil einen kleineren Aussendurchmesser auf als das Aufnahmeteil, was beispielsweise im Hinblick auf den Materialaufwand vorteilhaft sein kann.

Besonders bevorzugt ist es, dass das Aufnahmeteil zumindest eine Wandstärkeverjüngung aufweist, welche dem zumindest einen Steg, insbesondere axial und/oder in einer den Steg in Umfangsrichtung überlappenden Position, vorgelagert ist. Insbesondere kann die Wandstärkeverjüngung bis zur vorderen Stirnseite des Aufnahmeteils reichen. Dies kann zur Entlastung des Stegs der Mittel zur Drehmomentübertragung bei der Fertigung der Halteklauen beitragen. Werden die Halteklauen nämlich durch vorderseitiges Stauchen des Aufnahmeteils in einer Matrize gefertigt, kann die Wandstärkeverjüngung bewirken, dass dort die Matrize weniger stark oder gar nicht angreift, so dass der axial darüber liegende Steg entsprechend vergleichsweise gering belastet wird. Sofern mehrere Stege vorgesehen sind, ist vorzugsweise jedem der Stege eine Wandstärkeverjüngung vorgelagert. Ebenfalls zum Zwecke der Entlastung des Steges kann es vorteilhaft sein, dass das Aufnahmeteil in einem axial vor dem Steg angeordneten Bereich aussenseitig gegenüber einem Umkreis um das Aufnahmeteil zurückversetzt ist.

Geeigneterweise weist das Kopfteil einen Axialanschlag auf, welcher einen rückwärtigen Anschlag für die Mutter bildet. Dieser Axialanschlag kann beispielsweise durch Vorsprünge oder einen Ring gebildet sein, welcher am Kopfteil vorsteht. Der Axialanschlag kann insbesondere von den Mitteln zur Drehmomentübertragung beabstandet sein, um eine axiale Belastung dieser Mittel, die im ungünstigsten Fall zum vorzeitigen Bruch der Mittel führen könnte, zu vermeiden.

Weiterhin ist es vorteilhaft, dass die Mutter von der zumindest einen Halteklaue axial spielfrei gehalten wird, und dass die Mutter vorzugsweise zwischen dem Axialanschlag und der zumindest einen Halteklaue spielfrei aufgenommen ist. Hierunter kann insbesondere verstanden werden, dass die Mutter zugleich am Axialanschlag und an der zumindest einen Halteklaue anliegt, ersteres an der Rückseite der Mutter, letzteres an der Vorderseite der Mutter.

Die spielfreie Anordnung kann eine unerwünschte Relativbewegung der Mutter im Halteelement mit entsprechenden Beschleunigungskräften und -lasten vermeiden.

Besonders bevorzugt ist es, dass das Aufnahmeteil, vorzugsweise stirnseitig, zumindest eine Ausnehmung für ein Werkzeug, insbesondere für eine Schraubendreherklinge, aufweist. Durch Einbringen eines Werkzeugs in die Ausnehmung und beispielsweise Verdrehen der Schraubendreherklinge in der Ausnehmung kann das Aufnahmeteil unter Überwindung der zumindest einen Halteklaue von der Mutter abgehoben werden.

Die Erfindung betrifft auch eine Befestigungsanordnung bestehend aus einem Spreizanker und einer erfindungsgemässen Vorrichtung zur Drehmomentbegrenzung, wobei die Mutter der Vorrichtung auf den Spreizanker aufgeschraubt ist. Unter einem Spreizanker kann in fachüblicher Weise insbesondere ein Anker verstanden werden, welcher ein Spreizelement, beispielsweise eine Spreizhülse aufweist, das zum Verankern am Anker radial nach aussen versetzt wird.

Die Erfindung betrifft auch ein Verfahren zum Herstellen einer erfindungsgemässen Vorrichtung zur Drehmomentbegrenzung, bei dem die zumindest eine Halteklaue durch Einpressen des Aufnahmeteils, insbesondere des vorderseitigen Endes des Aufnahmeteils, in eine Matrize gefertigt wird. Wie schon oben erläutert kann insbesondere vorgesehen sein, den Rohling im Anschluss an das Einlegen der Mutter in die Aufnahme am Aufnahmeteil radial durch Einpressen in eine Matrize so zu beaufschlagen, dass Material der Aufnahme radial nach innen fliesst und die Halteklaue bildet. Die Matrize kann insbesondere eine sich innenseitig zumindest bereichsweise verjüngende Matrize sein, vorzugsweise eine Matrize mit einer konischen Innenform.

Merkmale die im Zusammenhang mit den erfindungsgemässen Vorrichtungen zur Drehmomentbegrenzung erläutert werden, können auch bei den erfindungsgemässen Befestigungsanordnungen und den erfindungsgemässen Herstellungsverfahren zum Einsatz kommen, so wie auch umgekehrt Merkmale die im Zusammenhang mit den erfindungsgemässen Befestigungsanordnungen oder den erfindungsgemässen Herstellungsverfahren erläutert werden auch bei erfindungsgemässen Vorrichtungen zur Drehmomentbegrenzung zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine perspektivische Darstellung einer **ersten** Ausführungsform einer erfindungsgemässen Vorrichtung zur Drehmomentbegrenzung mit Blick auf die Vorderseite der Vorrichtung;
- Figur 2:: eine perspektivische Darstellung der Vorrichtung aus Figur 1 mit Blick auf die Rückseite der Vorrichtung;
- Figur 3:: eine Längsschnittansicht der Vorrichtung zur Drehmomentbegrenzung aus Figur 1 und 2;
- Figur 4:: eine Befestigungsanordnung bestehend aus einer Vorrichtung zur Drehmomentbegrenzung gemäss Figuren 1 bis 3 und einem Spreizanker in perspektivischer Ansicht mit Blick auf die Rückseite der Vorrichtung zur Drehmomentbegrenzung;
- Figur 5:: die Befestigungsanordnung gemäss Figur 4 in teilgeschnittener Längsschnittansicht;
- Figuren 6 und 7:: aufeinanderfolgende Prozessstadien bei der Fertigung einer Vorrichtung zur Drehmomentbegrenzung entsprechend Figuren 1 bis 3;
- Figur 8:: eine perspektivische Darstellung einer **zweiten** Ausführungsform einer erfindungsgemässen Vorrichtung zur Drehmomentbegrenzung mit Blick auf die Vorderseite der Vorrichtung;
- Figur 9:: eine perspektivische Darstellung der Vorrichtung aus Figur 8 mit Blick auf die Rückseite der Vorrichtung;
- Figur 10:: eine Längsschnittansicht der Vorrichtung zur Drehmomentbegrenzung aus Figur 8 und 9;
- Figur 11:: eine Befestigungsanordnung bestehend aus einer Vorrichtung zur Drehmomentbegrenzung gemäss Figuren 8 bis 10 und einem Spreizanker in perspektivischer Ansicht mit Blick auf die Rückseite der Vorrichtung zur Drehmomentbegrenzung;
- Figur 12:: die Befestigungsanordnung gemäss Figur 11 in teilgeschnittener Längsschnittansicht; und
- Figuren 13 und 14:: aufeinanderfolgende Prozessstadien bei der Fertigung einer Vorrichtung zur Drehmomentbegrenzung entsprechend Figuren 8 bis 10.

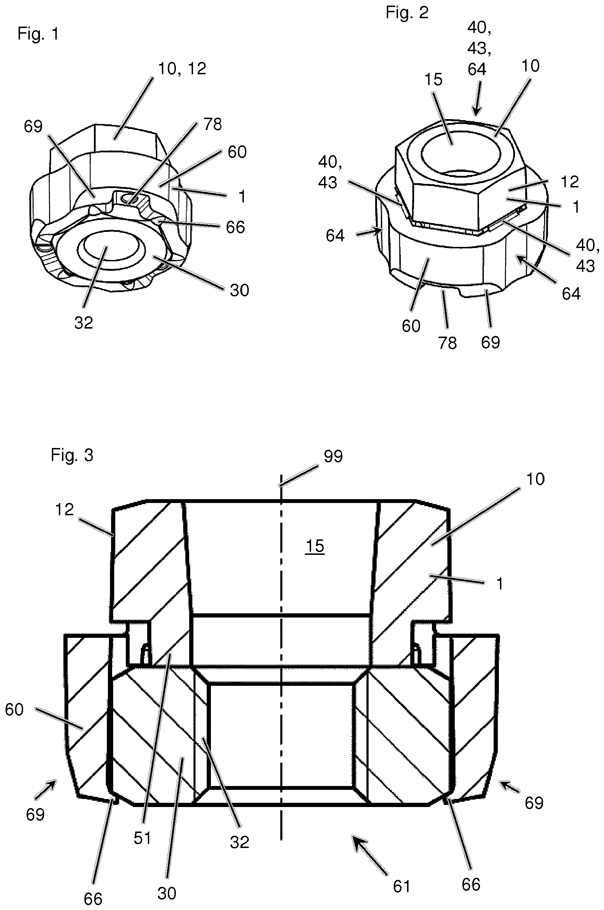

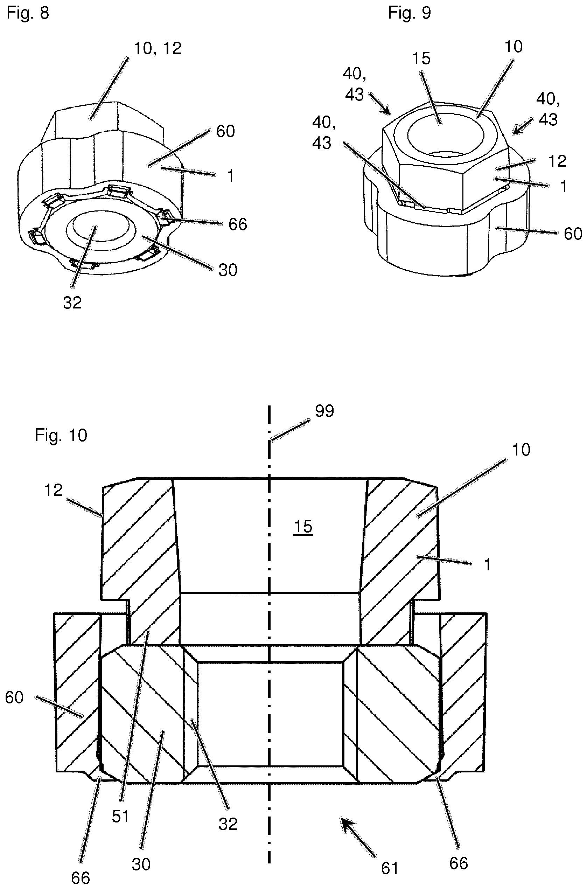

Die Ansichten der Figuren 8 bis 14, welche die zweite Ausführungsform zeigen, haben jeweils im wesentlichen dieselben Perspektiven wie die Ansichten der Figuren 1 bis 7, welche die erste Ausführungsform zeigen.

Die Figuren 1 bis 3 zeigen ein erstes Ausführungsbeispiel einer erfindungsgemässen Vorrichtung zur Drehmomentbegrenzung. Wie diese Figuren zeigen weist die Vorrichtung zum einen eine Mutter 30 mit einem Innengewinde 32 und zum anderen ein kronenförmiges Halteelement 1 auf, in welchem die Mutter 30 gehalten ist. Das Halteelement 1 wiederum weist in seinem rückwärtigen Bereich ein Kopfteil 10, in seinem vorderen Bereich ein dem Kopfteil 10 nach vorne hin vorgelagertes Aufnahmeteil 60 sowie beispielhaft drei Stege 43 auf. Die Stege 43 verbinden das Kopfteil 10 und das Aufnahmeteil 60 und bilden Mittel 40 zur Drehmomentübertragung vom Kopfteil 10 auf das Aufnahmeteil 60. Die Stege 43 erstrecken sich ausgehend vom Kopfteil 10 radial nach aussen zum Aufnahmeteil 60 hin, welches aussendurchmessergrösser als das Kopfteil 10 ist. Die Stege 43 sind insbesondere in Figur 2 zu erkennen, wobei der hintere, verdeckte Steg 43 in Analogie zu den beiden vorderen, sichtbaren Stegen 43 ausgebildet ist.

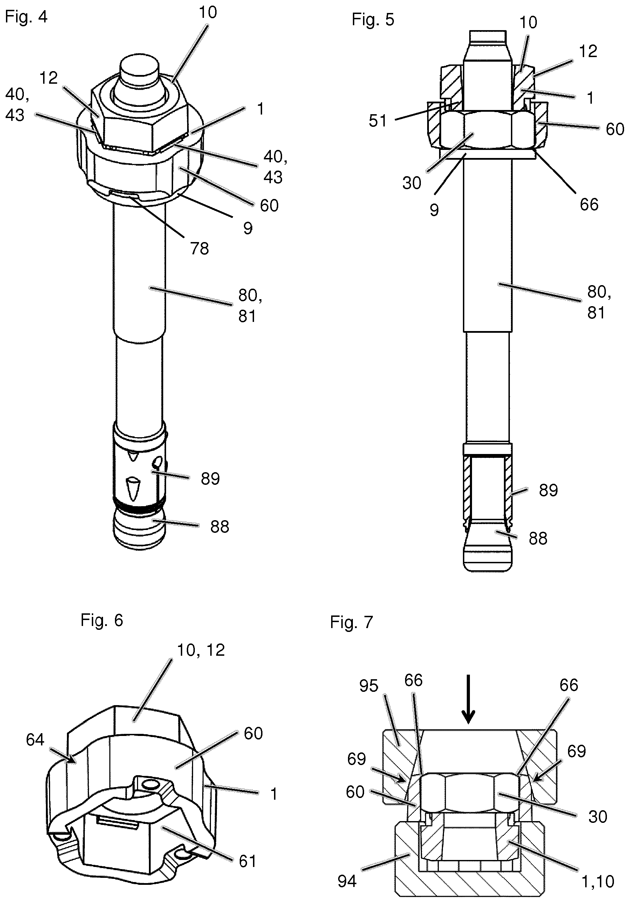

Im Aufnahmeteil 60 ist eine Aufnahme 61 ausgebildet, in welcher die Mutter 30 aufgenommen ist. Zur formschlüssigen Drehmomentübertragung vom Aufnahmeteil 60 auf die Mutter 30 weist das Aufnahmeteil 60 an der Aufnahme 61 ein Innensechskantprofil auf, welches insbesondere in Figur 6 erkennbar ist, und welches mit einem Aussensechskantprofil der Mutter 30 korrespondiert. Anstelle eine Sechskants kann auch ein anderes Mehrkantprofil vorgesehen sein. Zusätzlich oder alternativ kann auch eine reibschlüssige drehfeste Verbindung vorhanden sein.

Das Kopfteil 10 weist ein, beispielsweise als Aussensechskantprofil ausgebildetes, Mitnahmeprofil 12 auf, mittels dem ein Drehmoment von einem nicht dargestellten Setzwerkzeug formschlüssig auf das Kopfteil 10 übertragen werden kann. Das Aufnahmeteil 60 und das Kopfteil 10 sind koaxial angeordnet und definieren eine gemeinsame Längsachse 99 der Vorrichtung. Das Kopfteil 10 weist einen Durchgang 15 auf, welcher mit der Aufnahme 61 des Aufnahmeteils 60 fluchtet, so dass eine in die Mutter 30 eingeschraubte Gewindestange auf der Rückseite des Aufnahmeteils 60 aus dem Aufnahmeteil 60 austreten kann. Die Längsachse 99 verläuft durch die Aufnahme 61 und den Durchgang 15 hindurch.

Wie insbesondere in Figur 3 und Figur 5 erkennbar ist, weist das Kopfteil 10 einen Axialanschlag 51 auf, welcher einen rückwärtigen Anschlag für die Mutter 30 bildet. Der Axialanschlag 51 begrenzt eine Axialbewegung der in der Aufnahme 61 aufgenommenen Mutter 30 relativ zum Kopfteil 10 nach hinten hin. Darüber hinaus ermöglicht der Axialanschlag 51 eine unmittelbare Übertragung von Axialkräften vom Kopfteil 10 auf die Mutter 30, ohne die Stege 43 zu belasten. Der Axialanschlag 51 ist hier beispielhaft durch einen ringförmigen, vorzugsweise geschlossen ringförmigen, Vorsprung gebildet, welcher am Kopfteil 10 vorsteht. Weiter beispielhaft ist der Axialanschlag 51 hier radial weiter innen als die Stege 43 und/oder axial vor den Stegen 43 liegend gezeigt.

Das Halteelement 1 weist ferner Halteklauen 66 auf, welche an der Vorderseite des Aufnahmeteils 60, das heisst an der dem Kopfteil 10 abgewandten Seite des Aufnahmeteils 60, am Aufnahmeteil 60 angeordnet sind. Diese Halteklauen 66 bilden einen vorderen Anschlag für die Mutter 30 und begrenzen eine Axialbewegung der in der Aufnahme 61 aufgenommenen Mutter 30 relativ zum Kopfteil 10 nach vorne hin. Im dargestellten Ausführungsbeispiel sind beispielhaft insgesamt sechs Halteklauen 66 vorgesehen, jeweils eine pro Kante des Innensechskantprofils der Aufnahme 61. Wie insbesondere Figur 1 zeigt, ist dabei jeder Kante des Innensechskantprofils jeweils eine Halteklaue 66 in einer in Umfangsrichtung überlappenden Position vorgelagert, so dass die Halteklauen 66 jeweils an einer Kante der Mutter 30 wirken.

Vorzugsweise ist die Mutter 30 axial spielfrei zwischen dem Axialanschlag 51 einerseits und den Halteklauen 66 andererseits eingefasst, das heisst die Mutter 30 liegt gleichzeitig rückseitig am Axialanschlag 51 und vorderseitig an zumindest einer der Halteklauen 66 an.

Die Halteklauen 66 sind monolithisch mit dem Aufnahmeteil 60 ausgebildet. Das Aufnahmeteil 60, das Kopfteil 10, die Stege 43 und/oder die Halteklauen 66 weisen ein Metallmaterial auf.

Die Figuren 4 und 5 zeigen eine Befestigungsanordnung bestehend aus der zuvor beschriebenen Vorrichtung zur Drehmomentbegrenzung und einem Spreizanker 80. Bei solchen mechanischen Ankern kann eine Installation mit einer definierten Vorspannung durch ein Anziehen mit einem definierten Grenzdrehmoment beispielsweise zur Vermeidung von Abplatzungen im Substrat bei Montage in Randnähe relevant sein. Der Spreizanker 80 weist einen Schaft 81 sowie ein Spreizelement 89 auf, welches hier beispielhaft als eine den Schaft 81 umgebende Spreizhülse ausgeführt ist. Am Schaft 81 ist, insbesondere in einem vorderen Bereich, eine, vorzugsweise konische, Schrägfläche 88 angeordnet, welche sich nach hinten hin verjüngt. Zwischen der Schrägfläche 88 des Schafts 81 und dem Spreizelement 89 ist ein Keilgetriebe gebildet, welches eine axiale Relativbewegung des Schafts 81 zum Spreizelement 89 in eine radiale Bewegung des Spreizelements 89 umwandeln kann, und somit das Spreizelement 89 bei Zugbelastung im Schaft 81 an der Wand eines Bohrlochs verankern kann.

In der Befestigungsanordnung der Figuren 4 und 5 ist die Mutter 30 der Vorrichtung zur Drehmomentbegrenzung auf den Schaft 81 des Spreizankers 80 aufgeschraubt, wobei der Schaft 81 des Spreizankers 80 die Vorrichtung zur Drehmomentbegrenzung durchläuft, also vorderseitig in die Vorrichtung eintritt und rückseitig aus der Vorrichtung austritt, und wobei die Schrägfläche 88 des Spreizankers 80 und das Spreizelement 89 des Spreizankers 80 der Vorrichtung zur Drehmomentbegrenzung vorgelagert sind.

Bei der Montage wird der Spreizanker 80 der Befestigungsanordnung durch Hammerschläge auf die Rückseite des Schafts 81 in ein Bohrloch eingehämmert. Die Halteklauen 66 stellen dabei sicher, dass trotz der Trägheit des Halteelements 1 die auf den Schaft 81 aufgeschraubte Mutter 30 im Halteelement 1 verbleibt.

Mittels eines Setzwerkzeugs wird sodann über das Mitnahmeprofil 12 ein Drehmoment auf das Kopfteil 10 ausgeübt. Dieses Drehmoment wird über die Stege 43 auf das Aufnahmeteil 60 und vom Aufnahmeteil 60 weiter auf die Mutter 30 übertragen. Dies wiederum bewirkt eine Zugkraft im Schaft 81 des Spreizankers 80, was wiederum das Spreizelement 89 radial belastet und hierdurch den Spreizanker 80 verankert.

Erreicht das am Kopfteil 10 aufgebrachte Drehmoment ein vorbestimmtes Grenzdrehmoment, so scheren die Stege 43 ab, mit der Folge, dass das Kopfteil 10 vom Aufnahmeteil 60 abgetrennt wird und keine weitere Drehmomentübertragung mehr auf das Aufnahmeteil 60 und die Mutter 30 stattfindet. Die Vorrichtung zur Drehmomentbegrenzung wirkt daher als drehmomentbegrenzende Abreissmutter. Nach dem Abscheren der Stege 43 ist das Kopfteil 10 vom Aufnahmeteil 60 getrennt und fällt vom Aufnahmeteil 60 ab.

Wie insbesondere in Figur 3 erkennbar ist, steht die in der Aufnahme 61 angeordnete Mutter 30 ein kleines Stück weit über die Halteklauen 66 nach vorne hin vor. Somit reibt bei Drehung der Vorrichtung vorwiegend die Mutter 30 am benachbarten Teil, wobei das benachbarte Teil insbesondere die in den Figuren 4 und 5 gezeigte Unterlegscheibe 9 sein kann, und die Reibung wird vorwiegend durch die Oberflächenbeschaffenheit der Mutter 30 charakterisiert.

Die Vorrichtung zur Drehmomentbegrenzung weist an der vorderen Stirnseite ihres Aufnahmeteils 60 Ausnehmungen 78 auf. In diese kann beispielsweise ein Schraubendreher oder ein anderes Werkzeug eingeschoben werden, um das Aufnahmeteil 60 unter Überwindung der Halteklauen 66 von der Mutter 30 abzuheben, sofern dies, insbesondere nach dem Abreissen des Kopfteils 10 vom Aufnahmeteil 60, erforderlich sein sollte.

Die Fertigung der Vorrichtung zur Drehmomentbegrenzung entsprechend der ersten Ausführungsform ist schematisch in den Figuren 6 und 7 dargestellt. Wie Figur 6 zeigt sind die Innenwände der Aufnahme 61 im Aufnahmeteil 60 zu Beginn des Fertigungsprozesses noch glatt und die Halteklauen 66 fehlen noch, was einen Eintritt der Mutter 30 in die Aufnahme 61 von der Vorderseite des Aufnahmeteils 60 her erlaubt. In einem darauffolgenden Fertigungsschritt, der in Figur 7 gezeigt ist, wird die Mutter 30 axial in die Aufnahme 61 eingeführt und die Vorrichtung zur Drehmomentbegrenzung sodann zwischen einem Stempel 94 und einer Matrize 95 angeordnet, welche eine Matrizenöffnung für das Aufnahmeteil 60 aufweist, und zwar so, dass das Kopfteil 10 zum Stempel 94 und das Aufnahmeteil 60 zur Matrize 95 weist. Die Matrizenöffnung für das Aufnahmeteil 60 verjüngt sich mit zunehmender Tiefe, vorzugsweise konisch. Sodann werden, wie mit einem Pfeil angedeutet Stempel 94 und Matrize 95 einander angenähert. Hierdurch wird das Aufnahmeteil 60 an seinem vorderen Ende in die Matrizenöffnung eingepresst. Die Verjüngung der Matrizenöffnung bewirkt einen radial nach innen gerichteten Materialfluss am vorderen Ende des Aufnahmeteils 60, bei dem die Halteklauen 66 geformt werden und die Mutter 30 hierbei in der Aufnahme 61 gesichert und mit dem Halteelement 1 verstemmt wird. Als Folge des radialen Materialflusses nach innen können an der Aussenseite des Aufnahmeteils 60 Abflachungen 69 entstehen. Wie Figur 7 zeigt ist es besonders bevorzugt, dass der Stempel 94 und die Matrize 95 ausschliesslich gegen das Aufnahmeteil 60 und nicht gegen das Kopfteil 10 wirken, so dass die Stege 43 zwischen Kopfteil 10 und Aufnahmeteil 60 nicht schon während der Fertigung belastet werden.

Wie insbesondere die Figuren 2 und 6 zeigen, weist das Aufnahmeteil 60, insbesondere auch schon vor dessen Einbringen in die Matrize 95, Wandstärkeverjüngungen 64 auf, im vorliegenden Ausführungsbeispiel drei an der Zahl. Jedem Steg 43 ist eine Wandstärkeverjüngung 64 axial vorgelagert, d.h. der jeweilige Steg 43 und die jeweilige Wandstärkeverjüngung 64 befinden sich in einer in Umfangsrichtung überlappenden Position. Die Wandstärkeverjüngungen 64 reichen dabei bis an die vordere Stirnseite der Aufnahme 60. Aufgrund der Wandstärkeverjüngen 64 wirkt die Matrize 95 in Umfangsrichtung zu den Stegen 43 versetzt gegen das Aufnahmeteil 60, und die Stegen 43 werden somit bei der Fertigung der Halteklauen 66 geschont. Als Folge dieser Ausgestaltung können bei der fertigen Vorrichtung die Abflachungen 69 in Umfangsrichtung versetzt zu den Stegen 43 angeordnet sein.

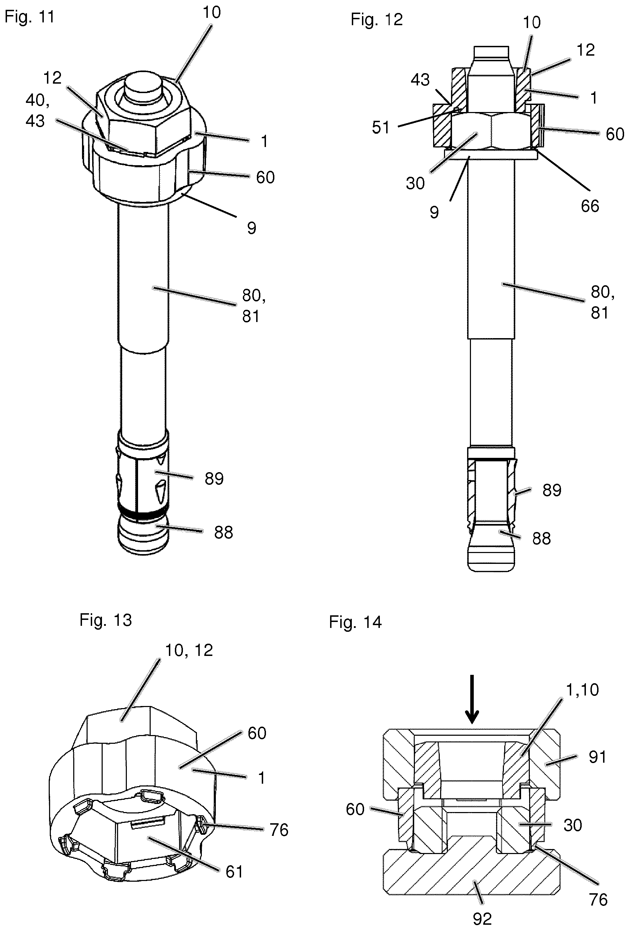

Die Figuren 8 bis 10 zeigen eine zweite Ausführungsform einer erfindungsgemässen Vorrichtung zur Drehmomentbegrenzung, die Figuren 11 und 12 eine hiermit gebildete Befestigungsanordnung und die Figuren 13 und 14 ein zugehöriges Herstellungsverfahren. Die Ausgestaltungen der Figuren 8 bis 14 realisieren eine Reihe von Merkmalen der Ausgestaltungen der Figuren 1 bis 7 in analoger Weise, so dass die obenstehende Beschreibung analog angewandt werden kann und im Folgenden nur auf wesentliche Unterschiede eingegangen wird, wobei beim zweiten Ausführungsbeispiel gleich wirkende Elemente in den Figuren mit denselben Bezugszeichen gekennzeichnet sind wie beim ersten Ausführungsbeispiel.

Unterschiede zwischen den beiden Ausführungsformen bestehen insbesondere in der Form der Halteklauen 66 und deren Herstellungsweise. Wie insbesondere die Figuren 13 und 14 zeigen, werden die Halteklauen 66 der zweiten Ausführungsform im Gegensatz zur ersten Ausführungsform nicht durch radiales Stauchen der Wand der Aufnahme 61 gefertigt, sondern die Halteklauen 66 werden durch Umbiegen von Lappen 76 gefertigt, welche zu Beginn des Fertigungsvorgangs stirnseitig am Aufnahmeteil 60 axial vorstehen. Wie Figur 13 zeigt sind die Lappen 76 zu Beginn des Fertigungsprozesses noch gerade, das heisst noch nicht umgebogen, und erlauben einen Eintritt der Mutter 30 in die Aufnahme 61. In einem anschliessenden Fertigungsschritt, der in Figur 14 gezeigt ist, wird die Mutter 30 axial in die Aufnahme 61 eingeführt und die Vorrichtung zur Drehmomentbegrenzung sodann zwischen zwei Stempeln 91 und 92 angeordnet, welche wie mit einem Pfeil angedeutet aneinander angepresst werden. Hierdurch werden die Lappen 76 zu den Halteklauen 66 umgebogen und die Mutter 30 hierbei in der Aufnahme 61 gesichert und mit dem Halteelement 1 verstemmt. Die Stempel 91 und 92 können an einem einfachen Werkzeug, zum Beispiel einer Handpresse, oder auch einer automatisierten Presse vorgesehen sein. Wie Figur 14 zeigt ist es besonders bevorzugt, dass beide Stempel 91 und 92 ausschliesslich gegen das Aufnahmeteil 60 und nicht gegen das Kopfteil 10 wirken, so dass die Stege 43 zwischen Kopfteil 10 und Aufnahmeteil 60 nicht schon während der Fertigung belastet werden.

## Patentansprüche

1. Vorrichtung zur Drehmomentbegrenzung, aufweisend eine Mutter (30) und ein Halteelement (1), wobei
das Halteelement (1) in einem rückwärtigen Bereich des Halteelements (1) ein Kopfteil (10) mit einem Mitnahmeprofil (12) zur drehfesten Kopplung des Kopfteils (10) mit einem Setzwerkzeug aufweist,
das Halteelement (1) in einem vorderen Bereich des Halteelements (1) ein Aufnahmeteil (60) mit einer nach vorne hin offenen Aufnahme (61) aufweist, in welcher die Mutter (30) drehfest aufgenommen ist,
und das Halteelement (1) Mittel (40) zur Drehmomentübertragung vom Kopfteil (10) auf das Aufnahmeteil (60) aufweist, welche das Kopfteil (10) und das Aufnahmeteil (60) verbinden, wobei die Mittel (40) zur Drehmomentübertragung bei einem Grenzdrehmoment unter Aufhebung der Verbindung zwischen Kopfteil (10) und Aufnahmeteil (60) brechen,
**dadurch gekennzeichnet,**
**dass** das Halteelement (1) zumindest eine Halteklaue (66) aufweist, welche am Aufnahmeteil (60) angeordnet ist, und welche die Mutter (30) auf der Vorderseite der Mutter (30) in der Aufnahme (61) sichert.

2. Vorrichtung nach Anspruch 1,
**dadurch gekennzeichnet,**
**dass** die Mutter (30) nach vorne über die zumindest eine Halteklaue (66) vorsteht.

3. Vorrichtung nach einem der vorstehenden Ansprüche,
**dadurch gekennzeichnet,**
**dass** die zumindest eine Halteklaue (66) und das Aufnahmeteil (60) monolithisch ausgebildet sind.

4. Vorrichtung nach einem der vorstehenden Ansprüche,
**dadurch gekennzeichnet,**
**dass** das Halteelement (1) mehrere Halteklauen (66) aufweist, welche am Aufnahmeteil (60) angeordnet sind, und welche die Mutter (30) auf der Vorderseite der Mutter (30) in der Aufnahme (61) sichern.

5. Vorrichtung nach einem der vorstehenden Ansprüche,
**dadurch gekennzeichnet,**
**dass** die Mittel (40) zur Drehmomentübertragung als zumindest ein Steg (43) ausgebildet sind, welcher das Kopfteil (10) und das Aufnahmeteil (60) verbindet.

6. Vorrichtung nach Anspruch 5,
**dadurch gekennzeichnet,**
**dass** das Aufnahmeteil (60) zumindest eine Wandstärkeverjüngung (64) aufweist, welche dem zumindest einen Steg (43) vorgelagert ist.

7. Vorrichtung nach einem der vorstehenden Ansprüche,
**dadurch gekennzeichnet,**
**dass** das Kopfteil (10) einen Axialanschlag (51) aufweist, welcher einen rückwärtigen Anschlag für die Mutter (30) bildet.

8. Vorrichtung nach Anspruch 7,
**dadurch gekennzeichnet,**
**dass** die Mutter (30) zwischen dem Axialanschlag (51) und der zumindest einen Halteklaue (66) spielfrei aufgenommen ist.

9. Vorrichtung nach einem der vorstehenden Ansprüche,
**dadurch gekennzeichnet,**
**dass** das Aufnahmeteil (60) stirnseitig zumindest eine Ausnehmung (78) für ein Werkzeug, insbesondere für eine Schraubendreherklinge, aufweist.

10. Befestigungsanordnung bestehend aus einem Spreizanker (80) und einer Vorrichtung zur Drehmomentbegrenzung nach einem der vorstehenden Ansprüche, wobei die Mutter (30) der Vorrichtung auf den Spreizanker (80) aufgeschraubt ist.

11. Verfahren zum Herstellen einer Vorrichtung zur Drehmomentbegrenzung nach einem der Ansprüche 1 bis 9, bei dem die zumindest eine Halteklaue (66) durch Einpressen des vorderseitigen Endes des Aufnahmeteils (60) in eine Matrize (95) gefertigt wird.

## Claims

1. Device for limiting torque, comprising a nut (30) and a holding element (1), the holding element (1) comprising a head part (10) in a rear region of the holding element (1), which head part has a driver profile (12) for coupling the head part (10) to a setting tool for conjoint rotation, the holding element (1) comprising a receiving part (60) in a front region of the holding element (1), which receiving part has a receptacle (61) which is open toward the front and in which the nut (30) is received for conjoint rotation, and the holding element (1) comprising means (40) for transmitting torque from the head part (10) to the receiving part (60), which means connect the head part (10) and the receiving part (60), the means (40) for torque transmission breaking at a torque limit, thus removing the connection between the head part (10) and the receiving part (60), **characterized in that** the holding element (1) has at least one holding claw (66) which is arranged on the receiving part (60) and which secures the nut (30) in the receptacle (61) on the front face of the nut (30).

2. Device according to claim 1, **characterized in that** the nut (30) projects forward beyond the at least one holding claw (66).

3. Device according to either of the preceding claims, **characterized in that** the at least one holding claw (66) and the receiving part (60) are monolithic.

4. Device according to any of the preceding claims, **characterized in that** the holding element (1) comprises a plurality of holding claws (66) which are arranged on the receiving part (60) and which secure the nut (30) in the receptacle (61) on the front face of the nut (30).

5. Device according to any of the preceding claims, **characterized in that** the means (40) for torque transmission are designed as at least one projection (43) which connects the head part (10) and the receiving part (60).

6. Device according to claim 5, **characterized in that** the receiving part (60) comprises at least one wall thickness taper (64) which is arranged in front of the at least one projection (43).

7. Device according to any of the preceding claims, **characterized in that** the head part (10) comprises an axial stop (51) which forms a rear stop for the nut (30).

8. Device according to claim 7, **characterized in that** the nut (30) is received between the axial stop (51) and the at least one holding claw (66) with zero clearance.

9. Device according to any of the preceding claims, **characterized in that** the receiving part (60) has at least one recess (78) for a tool, in particular for a screwdriver blade, on the end face thereof.

10. Fastening arrangement consisting of an expansion anchor (80) and a device for limiting torque according to any of the preceding claims, wherein the nut (30) of the device is screwed onto the expansion anchor (80).

11. Method for manufacturing a device for limiting torque according to any of claims 1 to 9, in which the at least one holding claw (66) is produced by pressing the front end of the receiving part (60) into a die (95).

## Revendications

1. Dispositif de limitation de couple, comprenant un écrou (30) et un élément de retenue (1),
l'élément de retenue (1) présentant, dans une zone arrière de l'élément de retenue (1), une partie tête (10) comportant un profil d'entraînement (12) permettant l'accouplement solidaire en rotation de la partie tête (10) à un outil de pose,
l'élément de retenue (1) présentant, dans une zone avant de l'élément de retenue (1), une partie de logement (60) comportant un logement ouvert vers l'avant (61) dans lequel l'écrou (30) est reçu de manière solidaire en rotation,
et l'élément de retenue (1) présentant des moyens (40) permettant le transfert de couple de la partie tête (10) à la partie de logement (60), lesquels moyens relient la partie tête (10) et la partie de logement (60), les moyens (40) permettant le transfert de couple se rompant lors d'un couple limite en libérant la liaison entre la partie tête (10) et la partie de logement (60),
**caractérisé en ce que**
l'élément de retenue (1) présente au moins une griffe de retenue (66) qui est disposée sur la partie de logement (60) et qui bloque l'écrou (30), par la face avant de l'écrou (30), dans le logement (61).

2. Dispositif selon la revendication 1,
**caractérisé en ce que**
l'écrou (30) fait saillie vers l'avant à partir de l'au moins une griffe de retenue (66).

3. Dispositif selon l'une des revendications précédentes,
**caractérisé en ce que**
l'au moins une griffe de retenue (66) et la partie de logement (60) sont monolithiques.

4. Dispositif selon l'une des revendications précédentes,
**caractérisé en ce que**
l'élément de retenue (1) présente plusieurs griffes de retenue (66) qui sont disposées sur la partie de logement (60) et qui bloquent l'écrou (30), par la face avant de l'écrou (30), dans le logement (61).

5. Dispositif selon l'une des revendications précédentes,
**caractérisé en ce que**
les moyens (40) permettant le transfert de couple sont réalisés sous forme d'au moins une entretoise (43) qui relie la partie tête (10) et la partie de logement (60).

6. Dispositif selon la revendication 5,
**caractérisé en ce que**
la partie de logement (60) présente au moins un rétrécissement d'épaisseur de paroi (64) située en amont de l'au moins une entretoise (43).

7. Dispositif selon l'une des revendications précédentes,
**caractérisé en ce que**
la partie tête (10) présente une butée axiale (51) qui forme une butée arrière destinée à l'écrou (30).

8. Dispositif selon la revendication 7,
**caractérisé en ce que**
l'écrou (30) est reçu sans jeu entre la butée axiale (51) et l'au moins une griffe de retenue (66).

9. Dispositif selon l'une des revendications précédentes,
**caractérisé en ce que**
la partie de logement (60) présente, sur la face frontale, au moins un évidement (78) destiné à un outil, en particulier destiné à une lame de tournevis.

10. Système de fixation constitué d'une ancre d'expansion (80) et d'un dispositif de limitation de couple selon l'une des revendications précédentes, l'écrou (30) du dispositif étant vissé sur l'ancre d'expansion (80).

11. Procédé de production d'un dispositif de limitation de couple selon l'une des revendications 1 à 9, dans lequel l'au moins une griffe de retenue (66) est réalisée en pressant l'extrémité avant de la partie de logement (60) dans une matrice (95).
